# EUROPÄISCHE PATENTSCHRIFT

(11) **EP 0 522 514 B1**
(45) Veröffentlichungstag und Bekanntmachung des Hinweises auf die Patenterteilung: **14.06.1995**
(21) Anmeldenummer: 92111525.9
(22) Anmeldetag: 07.07.1992
(51) Int. Cl.: G03B 21/58

(54) **Gehäusekasten für aufrollbare Lichtbildwand**
Housing for retractable projection screen
Boîte pour écran de projection enroulable

(30) Priorität: 08.07.1991 DE 9108402 U; 18.09.1991 DE 9111610 U
(43) Veröffentlichungstag der Anmeldung: 13.01.1993
(73) Patentinhaber: MECHANISCHE WEBEREI GMBH & CO., D-33175 Bad Lippspringe (DE)
(72) Erfinder: Sperber, Georg, W-4792 Bad Lippspringe (DE)
(74) Vertreter: Thielking, Bodo, Dipl.-Ing.

(56) Entgegenhaltungen:
- CH-A- 495 565
- DE-A- 3 844 171

## Beschreibung

Die Erfindung betrifft einen Gehäusekasten für aufrollbare Lichtbildwand mit einer scharnierend angelenkten Abdeckklappe, wobei die Seitenwände des Gehäusekastens und die Abdeckklappe als Profile ausgebildet sind.

Bei allen bekannten Gehäusekästen erfolgt die Anlenkung der Abdeckklappe stets über besondere Scharniere. Solche Lösungen sind aufwendig und teuer.

Ausgehend von diesem Stand der Technik liegt der Erfindung die Aufgabe zugrunde, einen Gehäusekasten der als bekannt vorausgesetzten Art preisgünstig und einfach, jedoch sicher funktionsfähig auszubilden. Dabei soll ein besonderer Antrieb für das Öffnen und Schließen der Abdeckklappe verzichtbar sein.

Die Lösung dieser Aufgabe erfolgt dadurch, daß das Profil des Gehäusekastens und das Profil der Abdeckklappe angeformte, miteinander im Eingriff stehende und ein Schwenklager für die Abdeckklappe bildende Lagerbereiche aufweisen.

Die Anformung der verschiedenen Lagerbereiche erlaubt einen Verzicht auf separate Scharniere. Die Montage ist besonders einfach, die Funktion ist stets sicher.

Bei einer bevorzugten Ausführungsform der Erfindung weist das Profil neben der von der Abdeckklappe verschließbaren Öffnung ein Lagerauge auf, in dem ein seitlich am Profil der Abdeckklappe angeformter, als Lagerzapfen dienender Gegenbereich schwenkbar gelagert ist. Eine solche Ausführung hat sich als besonders praktisch erwiesen.

Bei einer weiteren bevorzugten Ausführungsform weist die Abdeckklappe an ihrer Innenseite einen Mitnehmer auf, der zum Hintergreifen durch das Beschwerungsrohr ausgebildet ist und sich in der geöffneteten Position der Abdeckklappe annähernd horizontal erstreckt.

Eine solche Konstruktion macht das Vorsehen eines Antriebs für die Klappe vollständig entbehrlich. Beim Ausfahren der Lichtbildwand fährt das Beschwerungsrohr nach unten und drückt damit die Klappe nach unten. Das Verschließen des Gehäusekastens erfolgt automatisch beim Hochfahren des Beschwerungsrohrs. Dieses Beschwerungsrohr legt sich beim Hochfahren gegen den Mitnehmer und nimmt beim Einfahren in das Gehäuseinnere die Klappe bis in ihre Schließlage mit.

Nachstehend wird eine bevorzugte Ausführungsform der Erfindung anhand der Zeichnung im einzelnen beschrieben. Es zeigen:
- Figur 1 -: einen Querschnitt durch einen Gehäusekasten mit angedeuteter aufgerollter Lichtbildwand im Zusammenbauzustand,
- Figur 2 -: einen Querschnitt durch das Gehäuseprofil und das Profil der Abdeckklappe.

Das Profil 1 des Gehäusekastens ist annähernd quadratisch ausgebildet. An seinen Stirnseiten sitzen Endkappen, die nicht näher dargestellt sind und das Profil zu einem Kasten ergänzen.

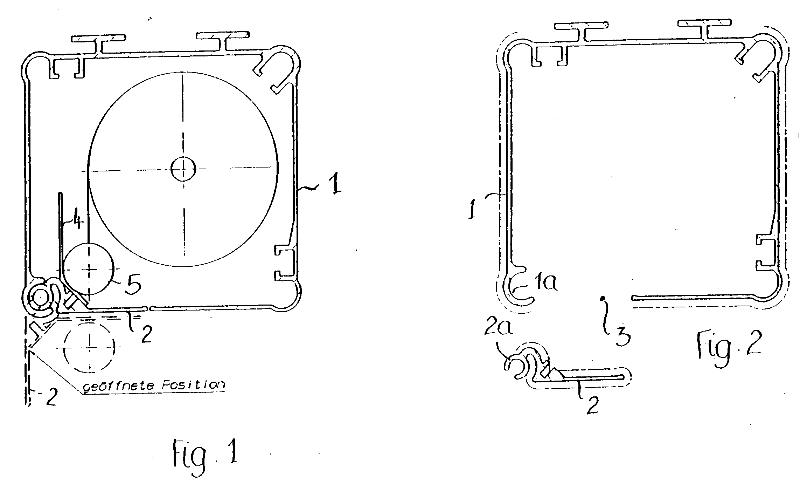

Im Profil ist ein Lagerauge 1a vorgesehen, das zur Aufnahme eines Gegenstücks an der Abdeckklappe 2 dient. Der Gegenbereich hat die Funktion eines Lagerzapfens 2a. Die Ausbildung des aus Lagerauge 1a und Lagerzapfen 2a bestehenden integrierten Scharniers erlaubt eine Verschwenkung der Abdeckklappe 2 zwischen zwei zueinander unter 90° verschwenkten Positionen. In der in Figur 1 durchgezogen dargestellten Position ist die Öffnung 3 durch die Abdeckklappe 2 vollständig verschlossen. Dabei weist ein an der Innenseite der Abdeckklappe 2 befestigter Mitnehmer 4 senkrecht nach oben.

In Figur 2 ist außerdem die geöffnete Position der Abdeckklappe 2 gestrichelt dargestellt. Dabei liegt die Abdeckklappe 2 waagerecht und der Mitnehmer erstreckt sich senkrecht oberhalb des Beschwerungsrohrs 5 der nicht dargestellten aufrollbaren Lichtbildwand.

Beim Ausfahren der Lichtbildwand wird die Abdeckklappe 2 zu einem Verschwenken in die gestrichelte Position freigegeben. Beim Einfahren wird die Klappe durch Anlage des Beschwerungsrohrs 5 am Mitnehmer 4 in die geschlossene Position mitgenommen.

Die Profile 1 und 2 sind zum Beispiel stranggepreßte Aluminiumprofile oder extrudierte Kunststoffprofile.

## Patentansprüche

1. Gehäusekasten für aufrollbare Lichtbildwand mit einer scharnierend angelenkten Abdeckklappe, wobei die Seitenwände des Gehäusekastens und die Abdeckklappe als Profile ausgebildet sind,
dadurch gekennzeichnet,
daß das Profil (1) des Gehäusekastens und das Profil der Abdeckklappe (2) angeformte, miteinander im Eingriff stehende und ein Schwenklager für die Abdeckklappe (2) bildende Lagerbereiche (1a; 2a) aufweisen.

2. Gehäusekasten nach Anspruch 1,
dadurch gekennzeichnet,
daß das Profil (1) neben der von der Abdeckklappe (2) verschließbaren Öffnung (3) ein Lagerauge (1a) aufweist, in dem ein seitlich am Profil der Abdeckklappe (2) angeformter, als Lagerzapfen (2a) dienender Gegenbereich schwenkbar gelagert ist.

3. Gehäusekasten nach Anspruch 1 oder 2,
dadurch gekennzeichnet,
daß die Abdeckklappe (2) an ihrer Innenseite einen Mitnehmer (4) aufweist, der zum Hintergreifen durch das Beschwerungsrohr (5) ausgebildet ist und sich in der geöffneten Position der Abdeckklappe (2) annähernd horizontal erstreckt.

## Claims

1. Box housing for roll-up projection screen with a hinged cover flap wherein the side walls of the box and the cover flap are formed as profiled sections, characterised in that the profiled section (1) of the box housing and the profiled section of the cover flap (2) have moulded-on interengaging bearing areas (1a;2a) forming a swivel bearing for the cover flap (2).

2. Box housing according to claim 1 characterised in that the profiled section (1) has next to the opening (3) closable by the cover flap (2) a bearing eye (la) in which a counter area is swivel mounted wherein the counter area is moulded on the side of the profiled section of the cover flap (2) and serves as a bearing pin (2a).

3. Box housing according to claim 1 or 2 characterised in that the cover flap (2) has on the inside an entrainment member (4) which is formed for engaging behind the weighting tube (5) and extends approximately horizontal in the opening position of the cover flap (2).

## Revendications

1. Boîte pour écran de projection enroulable avec volet de recouvrement (2) articulé en forme de charnières, les parois latérales de la boîte et le volet de recouvrement étant conçus sous forme de profilés,
caractérisée en ce que
le profilé (1) de la boîte et le profilé (2) du volet de recouvrement présentant des zones (1a; 2a) formées à partir d'eux et en prise mutuelle, lesquelles forment un coussinet de pivotement pour le volet de recouverment (2).

2. Boîte pour écran de projection enroulable selon la revendication 1,
caractérisée en ce que
le profilé (1) présente, à côté de l'ouverture (3) fermable du volet de recouvrement (2), un oeil (la) dans lequel une contre-zone, formée latéralement à partir du profilé du volet de recouvrement (2) et servant de tourillon, est logée pivotante.

3. Boîte pour écran de projection enroulable selon la revendication 1 ou 2,
caractérisée en ce que
la surface interne du volet de recouvrement (2) présente un entraîneur (4) conçu pour être touché, par derrière, par le tube d'alourdissement (5) et s'étendant à peu près horizontalement quand le volet de recouvrement (2) est ouvert.
